# EUROPEAN PATENT SPECIFICATION

(11) **EP 3 657 335 B1**
(45) Date of publication and mention of the grant of the patent: **05.06.2024**
(21) Application number: 18835817.0
(22) Date of filing: 20.07.2018
(51) Int. Cl.: G06F 11/30, G06F 11/34

(54) **METHOD, DEVICE, AND APPARATUS FOR TRACKING AND MONITORING SOFTWARE BEHAVIOR**
VERFAHREN, VORRICHTUNG UND GERÄT ZUR VERFOLGUNG UND ÜBERWACHUNG VON SOFTWAREVERHALTEN
PROCÉDÉ, DISPOSITIF ET APPAREIL DE SUIVI ET DE SURVEILLANCE DE COMPORTEMENT DE LOGICIEL

(30) Priority: 21.07.2017 CN 201710598659
(43) Date of publication of application: 27.05.2020
(73) Proprietor: ZTE Corporation, Shenzhen, Guangdong 518057 (CN)
(72) Inventor: LIU, Binwu, Shenzhen Guangdong 518057 (CN)
(74) Representative: Aipex B.V.
(86) International application number: PCT/CN2018/096443
(87) International publication number: WO 2019/015670

(56) References cited:
- EP-A2- 1 308 844
- WO-A2-2011/065692
- CN-A- 1 688 979
- CN-A- 103 118 248
- CN-A- 106 611 397
- CN-A- 106 708 818
- US-A- 5 838 920
- US-A1- 2012 289 191
- US-A1- 2013 198 363

## Description

### TECHNICAL FIELD

The present disclosure relates to computer techniques and, in particular, to a method, device, and apparatus for tracking software behavior and a method, device, and apparatus for monitoring software behavior.

### BACKGROUND

Software has evolved in a direction of distribution, especially the prevalence of micro-service concepts. Distributed software represents the following characteristics: the software is composed of multiple micro-services, multiple instances, distributed deployment, internal dependencies of software runtime are complex and dynamically extended. In short, the software system becomes more and more complex, which brings great challenges to the operation and maintenance of the software, for example, perception of users of the application software cannot be determined, system bottleneck cannot be found or system optimization lacks foundation. Therefore, a monitoring system for tracking distributed applications came into being.

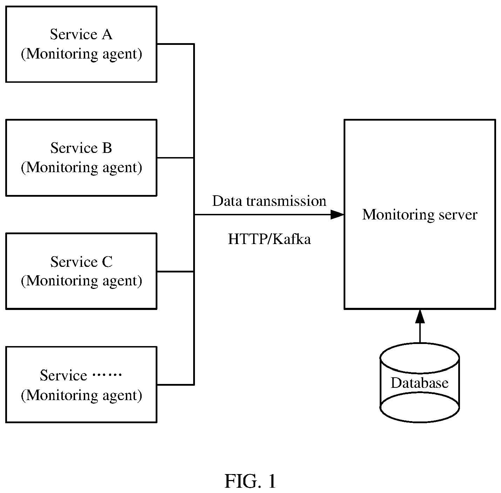

In the related art, monitoring is implemented by embedding a point at a back end service of the application system, and data acquisition is performed by embedded codes, which may achieve the tracking for a back-end calling process of the application system, and the corresponding system architecture is as shown in FIG. 1. The back end service of the application system (service functions implemented by a series of servers) includes a service A, a service B, and a service C. It is assumed that after the service A receives a request initiated by a front end, the internal calling process includes that: the service A calls the service B, the service B calls the service C, the service C returns the result to the service B, the service B returns the result to the service A, and finally the service A returns a response to the front end. Generally speaking, the process triggered by a request from the front end is a transaction. The monitoring system acquires (or captures) detail information of the calling process through monitoring agents on the service A, the service B, and the service C, where the information of the calling process includes the entire trajectory of the transaction in the services and time consumption of each link, etc. The acquired data is transmitted to the monitoring server for analysis and stored in the database after being processed. The user can see the detailed information of the entire call stack through an interface of the monitoring system. Through the monitoring system, the user can obtain a statistics information report of all transactions of the application system, which presents a calling frequency, a response time, and a success rate of each type of transaction.

However, the solution can only monitor the calling process of the back end, and cannot track the processing after the user initiates the request from the front end, and the solution can only presents transaction classification information on a specific implementation level, cannot perceive the user behaviors, and cannot satisfy the requirements for operation, maintenance and analysis of the application system.

Further relevant technologies are also known from US 5 838 920 A (ROSBOROUGH JAMES M [US]) 17 November 1998 (1998-11-17).

Further relevant technologies are also known from EP 1 308 844 A2 (SUN MICROSYSTEMS INC [US]) 7 May 2003 (2003-05-07)

Further relevant technologies are also known from US 2013/198363 A1 (KOLLURU RAGHU [US] ET AL) 1 August 2013 (2013-08-01).

Further relevant technologies are also known from WO 2011 /065692 A2 (JENNIFER SOFT CO LTD [KR]; KIM SUNG JO [KR]) 3 June 2011 (2011-06-03).

### SUMMARY

The invention is set out in the appended set of claims.

### BRIEF DESCRIPTION OF DRAWINGS

FIG. 1 is a schematic diagram of an architecture of a monitoring system in the existing art;
FIG. 2 is a schematic diagram of an architecture of a system provided by an embodiment of the present disclosure;
FIG. 3 is a flowchart of a method for tracking a software behavior provided by an embodiment of the present disclosure;
FIG. 4 is a module diagram of a device for tracking a software behavior provided by an embodiment of the present disclosure;
FIG. 5 is a flowchart of a method for monitoring a software behavior provided by an embodiment of the present disclosure;
FIG. 6 is a schematic diagram of an interaction process provided by an embodiment of the present disclosure;
FIG. 7 is a schematic diagram of an interaction process provided by another embodiment of the present disclosure; and
FIG. 8 is a schematic diagram of an interaction process provided by another embodiment of the present disclosure.

### DETAILED DESCRIPTION

Embodiments of the present disclosure will be described below in conjunction with the drawings.

### Embodiment one

This embodiment provides a method and device for monitoring a software behavior at a front end of an application system, a front end and a storage medium.

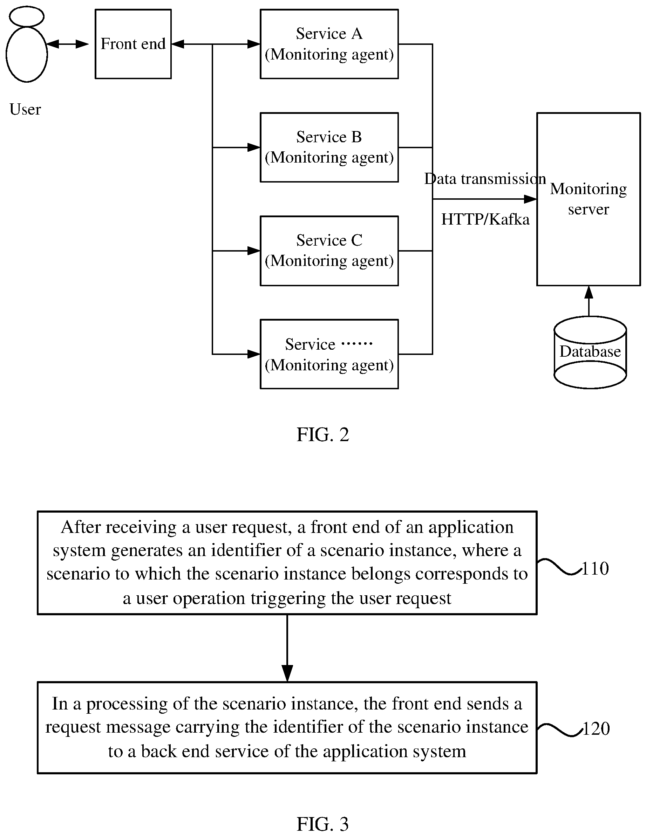

A system architecture of this embodiment is shown in FIG. 2, in which the front end and the user of the application system are also shown on the basis of the architecture of FIG. 1. The front end is an entry of the application system and is configured to receive a user request triggered by a user operation, which is processed through a beck end service. In this embodiment, tracking codes are embedded in front end codes, and tracking processing related to a scenario instance is implemented through the embedded codes.

The method for tracking software behavior provided by this embodiment is as shown in FIG. 3, and includes the steps described below.

In step 110, after receiving a user request, a front end of an application system generates an identifier of a scenario instance, where a scenario to which the scenario instance belongs corresponds to a user operation triggering the user request.

In the present application, one scenario of the application corresponds to a specified user operation. For example, "add to shopping cart" is a scenario, which may correspond to an operation of a user clicking an "add to shopping cart" icon on an interface. For example, "query historical performance data" is also a scenario, which may correspond to an operation of user clicking a corresponding query button on the interface. For an actual user operation, after receiving the user request, the front end of the application system starts a scenario instance (Usecase), i.e., a processing of the user request, including one or more interactions with a back end service. A scenario to which a scenario instance belongs corresponds to a user operation triggering the user request. For example, each time the front end receives the user request triggered by the user clicking the "add to shopping cart" icon, the scenario to which the started scenario instance belongs is "add to shopping cart".

In step 120, in the processing of the scenario instance, the front end sends a request message carrying the identifier of the scenario instance to the back end service of the application system.

One scenario instance includes one or more interactions between the front end and the back end service. Each interaction may also be taken as one call to the back end service made by the front end, including the entire process that the front end sends a request to the back end service and receives a response from the back end service. Each time receiving the request message sent by the front end, the back end service triggers starting of a transaction. Therefore, one scenario instance includes one or more transactions.

In this embodiment, in the processing of a scenario instance (i.e., a processing of the user request), the request message sent by the front end of the application system to the back end service of the application system carries the identifier of the scenario instance. When a scenario instance includes multiple transactions, the multiple transactions are associated according to the identifier of the scenario instance, thereby implementing effective tracking of the scenario instance.

In this embodiment, to implement scenario classification statistics, such as displaying a frequency, a success rate, and time consumption of the scenario of "add to shopping cart", in a processing of the scenario instance, the first one request message sent by the front end to the back end service further carries the identifier of the scenario to which the scenario instance belongs. The request message subsequently sent to the back end service carries the identifier of the scenario.

In this embodiment, to collect a start time of the scenario instance, in the processing of the scenario instance, the front end of the application system at least carries start time information of the scenario instance in the first one request message sent to the back end service.

In this embodiment, to collect an end time of the scenario instance, after the processing of the scenario instance completes (i.e., after the processing of the user request completes), the front end of the application system sends a notification message indicating ending of the scenario instance to the back end service of the application system, and the notification message carries end time information and the identifier of the scenario instance. After acquiring the end time information and the identifier of the scenario instance in the notification message, the monitoring system learns the end time of the scenario instance and adds the end time of the scenario instance to statistics information of the scenario instance.

In an example of the embodiment, when initiating a first call to the back end service, the front end of the application system carries, in a header of a sent hyperText transfer protocol (HTTP) message, the identifier of the scenario instance, the identifier of the scenario to which the scenario instance belongs and start time information of the scenario instance. In each subsequent call to the back end service, the front end carries the identifier of the scenario instance in the header of the sent HTTP message.

Other information other than the identifier of the scenario instance is optional.

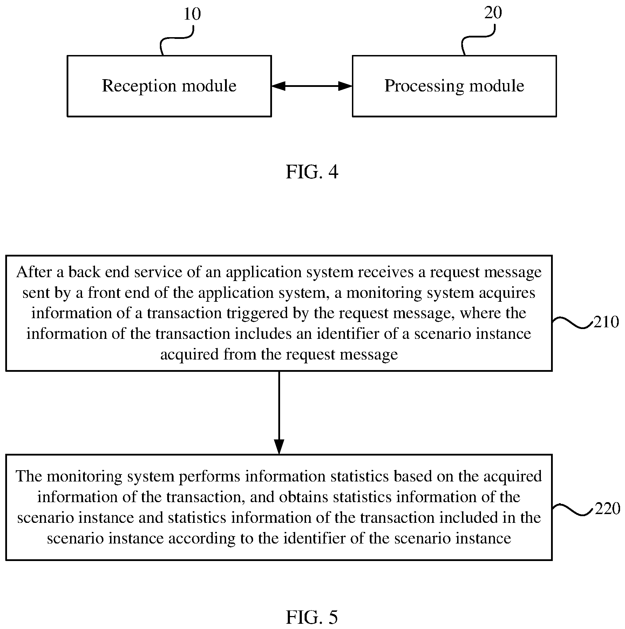

This embodiment further provides a system for tracking software behavior. As shown in FIG. 4, the system includes: a reception module 10 and a processing module 20. The reception module 10 is configured to generate, after receiving a user request, an identifier of a scenario instance, where a scenario to which the scenario instance belongs corresponds to a user operation triggering the user request. The processing module 20 is configured to send, in a processing of the scenario instance, a request message carrying the identifier of the scenario instance to a back end service of the application system.

In this embodiment, in the processing of the scenario instance, the processing module 20 is further configured to carry, in the first request message sent to the back end service, at least one of: an identifier of the scenario to which the scenario instance belongs or start time information of the scenario instance.

In this embodiment, the processing module 20 is further configured to send, after the processing of the scenario instance completes, a notification message indicating ending of the scenario instance ending to the back end service of the application system, where the notification message carries end time information of the scenario instance and the identifier of the scenario instance.

This embodiment further provides a front end apparatus of an application system. The front end apparatus includes a memory, a processor and computer programs stored in the memory and executable by the processor. When executing the computer programs, the processor implements:
generating, after receiving a user request, an identifier of a scenario instance, where a scenario to which the scenario instance belongs corresponds to a user operation triggering the user request; and
in a processing of the scenario instance, sending a request message carrying the identifier of the scenario instance to a back end service of the application system.

In this embodiment, the computer programs may implement any processing of the method in this embodiment when executed by the processor, which will not be repeated herein.

This embodiment further provides a computer-readable storage medium configured to store computer programs for implementing the following processing when executed by a processor:
generating, after receiving a user request, an identifier of a scenario instance, where a scenario to which the scenario instance belongs corresponds to a user operation triggering the user request; and
in a processing of the scenario instance, sending a request message carrying the identifier of the scenario instance to a back end service of the application system.

In this embodiment, the computer programs may implement any processing of the method in this embodiment when executed by the processor, which will not be repeated herein.

### Embodiment two

This embodiment provides a method for monitoring software behavior, a monitoring system and a storage medium.

When monitoring a back end service, the monitoring system of the embodiment acquires an identifier of a scenario instance delivered from a front end, and adds the identifier into monitoring information of a transaction, thereby implementing statistics based on the scenario instance. The front end of this embodiment uses the method in the embodiment one to track software behavior.

As shown in FIG. 5, the method for tracking software behavior provided by this embodiment includes the steps described below.

In step 210, after a back end service of an application system receives a request message sent by a front end, a monitoring system acquires information of a transaction triggered by the request message, where the information of the transaction includes an identifier of a scenario instance acquired from the request message.

As described in the embodiment one, in the processing of one scenario instance, each time the front end initiates a call to the back end service, the front end carries the identifier of the scenario instance in the corresponding request message. Therefore, the monitoring system may acquire the identifier of the scenario instance from the request message and take the identifier as a part of the acquisition information of the transaction.

In this embodiment, in the processing of the scenario instance, at least the first request message sent by the front end to the back end service further carries at least one of: an identifier of the scenario to which the scenario instance belongs or start time information of the scenario instance. Therefore, the information of the transaction acquired by the monitoring system further includes at least one of the following information acquired from the request message: an identifier of the scenario to which the scenario instance belongs or start time information of the scenario instance.

In this embodiment, after the processing of the scenario instance completes, the front end sends a notification message indicating the ending of the scenario instance to the back end service of the application system, and the notification message carries end time information and the identifier of the scenario instance. After the back end service receives the notification message sent by the front end, the monitoring system further acquires end time information and the identifier of the scenario instance from the notification message.

The acquisition of the identifier of the scenario instance, the identifier of the scenario to which the scenario instance belongs, the start time information and the end time information of the scenario instance may be specifically conducted by the embedded tracking codes (also referred to as the monitoring agent) of the back end service, and these information and other information of the transaction may be transmitted to the monitoring server for statistics and analysis.

In step 220, the monitoring system performs information statistics based on the acquired information of the transaction, and obtains, according to the identifier of the scenario instance, statistics information of the scenario instance and statistics information of the transaction included in the scenario instance.

In this embodiment, information of each transaction included in the scenario instance acquired by the monitoring system includes the identifier of the scenario instance. Therefore, the transaction included in the scenario instance may be determined according to the identifier of the scenario instance, thereby implementing scenario-instance-based statistics. Because the information of the first one of transactions included in the scenario instance also includes the identifier of the scenario to which the scenario instance belongs, all scenario instances in the scenario can be associated according to the identifier of the scenario to implement scenario classification and statistics. For example, all scenario instances in the scenario may be analyzed according to the identifier of the scenario of "add to shopping cart, and parameters such as the frequency, the success rate, and the time consumption of this scenario are obtained.

In this embodiment, the acquired information related to the scenario instance further includes the start time information and the end time information of the scenario instance, and thus statistics information of the scenario instance includes the start time information and the end time information of the scenario instance.

According to the method of this embodiment, the user may obtain all statistics information reports of the application system according to the scenarios, and an example is shown in the following table.

**Table 1-1**

| Scenario | Number | Success rate | Average time consumption (ms) | Minimum time consumption (ms) | Maximum time consumption (ms) |
|---|---|---|---|---|---|
| Scenario one | 500 | 98% | 28 | 15 | 69 |
| Scenario two | 365 | 96% | 40 | 7 | 75 |
| Scenario three | 470 | 100% | 65 | 34 | 126 |
| | | | | | |

**Table 1-2**

| Scenario instance | Scenario to which the scenario instance belongs | Total time consumption (ms) | Average time consumption (ms) | Minimum time consumption (ms) | Maximum time consumption (ms) |
|---|---|---|---|---|---|
| Scenario instance 1 | Scenario one | 15 | 7.5 | 7 | 8 |
| Scenario instance 2 | Scenario one | 20 | ······ | ······ | ······ |
| Scenario instance 3 | Scenario one | 64 | ······ | ······ | ······ |
| ······ | | | | | |

**Table 1-3**

| Identifier of scenario instance | Transaction | Response time (ms) | Type | Error | Anomaly |
|---|---|---|---|---|---|
| Scenario instance 1 | Transaction 1 | 7 | ······ | ······· | ······· |
| Scenario instance 1 | Transaction 2 | 8 | ······· | ······· | ······· |
| | | | | | |

Table 1-1 lists classification statistics of the scenario and shows information such as the frequency, the time consumption, and the success rate of each scenario. Selecting one of the scenarios, assuming that scenario one is selected, statistics information of all scenario instances in this scenario may be viewed, as shown in table 1-2, for the selected scenario instance to be paid attention in table 1-2, it is assumed that scenario instance one is selected, information of the transaction in this scenario instance may be viewed, as shown in table 1-3. This combines the scenario with the scenario instance and the transaction organically. The user may perform a behavior of analyzing software from top to bottom, such as performance, latency and frequency.

This embodiment further provides a monitoring system, including: a monitoring server and a monitoring agent implemented by embedding tracking codes at a back end service of an application system, which may refer to FIG. 1.

The monitoring agent is configured to acquire, after a back end service receives a request message sent by a front end, information of a transaction triggered by the request message and transmit the acquired information of the transaction to the monitoring server, where the information of the transaction includes an identifier of a scenario instance acquired from the request message.

The monitoring server is configured to perform information statistics based on the information of the transaction acquired by the monitoring agent, and obtain statistics information of the scenario instance and statistics information of the transaction included in the scenario instance according to the identifier of the scenario instance.

In this embodiment, the information of the transaction acquired by the monitoring agent may further include the identifier of the scenario to which the scenario instance belongs acquired from the request message, and the monitoring server is further configured to perform scenario classification statistics according to the identifier of the scenario when performing information statistics based on the information of the transaction acquired by the monitoring agent.

In this embodiment, the information of the transaction acquired by the monitoring agent may further included start time information of the scenario instance acquired from the request message.

The monitoring agent is further configured to acquire, after the back end service receives a notification message indicating the ending of scenario instance sent by the front end, end time information and the identifier of the scenario instance from the notification message.

The monitoring server is further configured to obtain the following statistics information of the scenario instance according to the identifier of the scenario instance: the start time information and the end time information of the scenario instance.

This embodiment further provides a computer-readable storage medium configured to store computer programs. When executed by a processor, the computer programs implementing the following processing:
monitoring a back end service of an application system through embedding tracking codes; and after the back end service receives a request message sent by the front end, acquiring information of a transaction triggered by the request message, where the information of the transaction includes an identifier of a scenario instance acquired from the request message; and
when performing information statistics based on the acquired information of the transaction, obtaining statistics information of the scenario instance and statistics information of the transaction included in the scenario instance according to the identifier of the scenario instance.

In this embodiment, the computer programs may implement any processing of the method in this embodiment when executed by the processor, which will not be repeated herein.

This embodiment classifies transactions of the application system according to usage scenarios and the scenario instances, so that the content displayed by the monitoring system matches the experience of the user using the application system, and it is convenient for the user to operate and analyze the application system. For example, operation and maintenance personnel of the application system may easily learn the most commonly used usage scenarios of the user and perceive the user behavior, thus providing an important reference for subsequent arrangement of system research and development resources, and focusing on the most commonly used scenarios of the user. The operation and maintenance personnel may also easily learn the slowest-responding scenarios and provide the important reference for system optimization.

The above embodiment of the present disclosure solves the problem that the general application monitoring system can only view the information of the transaction on a back end implementation level. Through injecting a unique scenario identifier, multiple associated transactions are combined to form a scenario instance. The scenario to which the scenario instance belongs corresponds to the operation of the application software user on the interface. Through such design, the monitoring system of the application software may associate software front-back end interactions according to the scenario and the scenario instance, and analyze the behavior of the application software according to the scenario and the scenario instance.

### Embodiment three

This embodiment takes an example of a historical performance data query system to illustrate a process of tracking software behavior by a front end of an application system and a process of monitoring software behavior by a monitoring system.

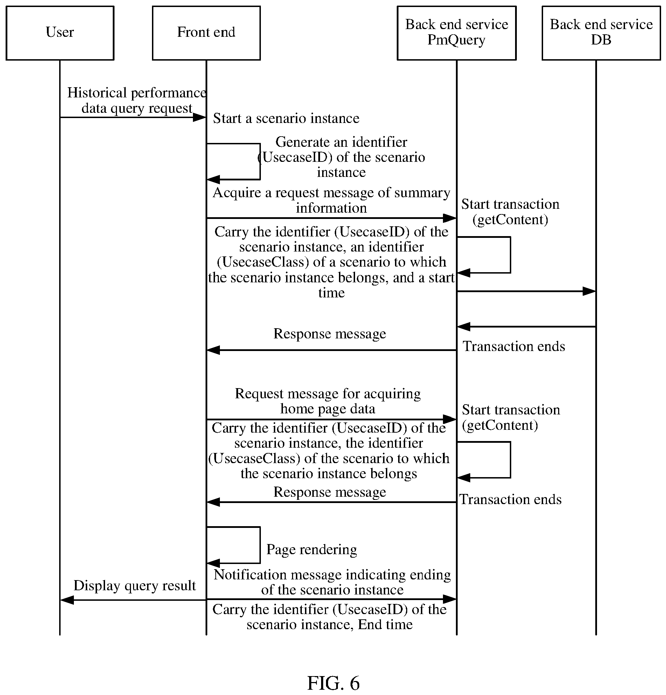

An architecture of the performance historical data query system of this embodiment may be seen in FIG. 2. After the user initiates a historical performance data query, the corresponding interaction process is as shown in FIG. 6, and includes the steps described below.

In step 1: the user initiates a historical performance data query request on the interface.

The user may initiate a historical performance query request by clicking an icon of the historical performance data query on a front end interface (such as a browser page). This operation corresponds to a scenario of "historical performance data query", which is marked as PMQuery.

In step 2, after receiving a user request for historical data query, the front end starts a scenario instance, and generates an identifier UsecaseID of a scenario instance (a value of the identifier is PmQueryxxx1) to uniquely identify the scenario instance.

In step 3: the front end initiates a call to the back end service PmQuery which is responsible for processing the historical performance data query, and sends a request message for acquiring summary information, where the UsecaseID, a UsecaseClass of the scenario to which the scenario instance belongs, and the start time StartTime of the scenario instance are carried in a header of the message. The UsecaseClass is this example is PMQuery.

A time of receiving the user request of the historical performance data query, or a time of initiating the call to the back end service PmQuery may be taken as the start time StartTime of the scenario instance.

In step 4: after receiving the request message for acquiring the summary information, the back end service PmQuery starts a transaction getContent for acquiring the summary information. In the processing of the transaction, the back end service PmQuery calls a back end service DB (a back end database service). After the processing of the transaction ends, the back end service PmQuery returns a response message to the front end.

In step 5: the front end initiates a call to the back end service PmQuery again, and sends a request message for acquiring home page data, where the header of the message carries the UsecaseID and UsecaseClass.

In step 6: after receiving the request message for acquiring the home page data, the back end service PmQuery starts a transaction getPage for acquiring the home page data, and after the processing of the transaction ends, the back end service PmQuery returns a response message to the front end.

In step 7: after receiving the response message, the front end performs page rendering to display a result of the historical performance data query to the user. After the interface rendering ends, the front end sends the notification message of the scenario instance ending to the back end service PmQuery, and the notification message carries the UsecaseID and an end time EndTime of the scenario instance.

The monitoring system may acquire information of the transaction getContent, the summary information and information of the transaction acquiring the home page data through embedding tracking codes at the back end service, and the acquired information of these two transactions includes the UsecaseID and the UsecaseClass, and information of the getContent further includes the StartTime and the EndTime. Therefore, through the UsecaseID, the transaction of acquiring the summary information and the transaction of acquiring the home page data are associated. The monitoring system completes data processing and persistence processing based on the acquired information of the transactions, and the user is able to analyze full process performance data of the performance query scenario, including the entire process of starting to initial the historical performance data query to displaying the query result on the interface.

An exemplary scenario analysis report obtained by monitoring in this embodiment is shown in the following table.

**Table 2-1**

| Scenario | Number | Success rate | Average time consumption (ms) | Minimum time consumption (ms) | Maximum time consumption (ms) |
|---|---|---|---|---|---|
| Performance data query | 500 | 98% | 28 | 15 | 69 |
| Configuration information acquisition | 365 | 96% | 40 | 7 | 75 |
| Daily report generation | 470 | 100% | 65 | 34 | 126 |
| | | | | | |

**Table 2-2**

| Scenario instance | Scenario to which scenario instance belongs | Total time consumption (ms) | Average time consumption (ms) | Minimum time consumption (ms) | Maximum time consumption (ms) |
|---|---|---|---|---|---|
| PmQueryxxx 1 | Historical performance data query | 15 | 7.5 | 7 | 8 |
| PmQueryxxx2 | Historical performance data query | 20 | ······· | ······· | ······· |
| PmQueryxxx3 | Historical performance data query | 64 | ······· | ······· | ······· |
| ······· | | | | | |

**Table 2-3**

| Scenario instance identifier | Transaction | Response time (ms) | Type | Error | Anomaly |
|---|---|---|---|---|---|
| PmQueryxxx 1 | getContent | 7 | ······· | ······· | ······· |
| PmQueryxxx1 | getPage | 8 | ······· | ······· | ······· |
| | | | | | |

Table 2-1 is a report of all scenarios corresponding to the user operation, including the historical performance data query, configuration information acquisition, and daily report generation. Information such as the frequency, the success rate and the time consumption of each scenario may be clearly seen. Then a specific scenario is selected, such as the historical performance data query, and the analysis report of each scenario instance in the scenario may be seen, as shown in table 2-2, including total time consumption of each scenario instance and time consumption information of the transaction. Finally, a most concerned scenario instance may be selected and specific information of the transaction included in this scenario instance is viewed, as shown in table 2-3.

### Embodiment four

This embodiment relates to the monitoring of an asynchronous report.

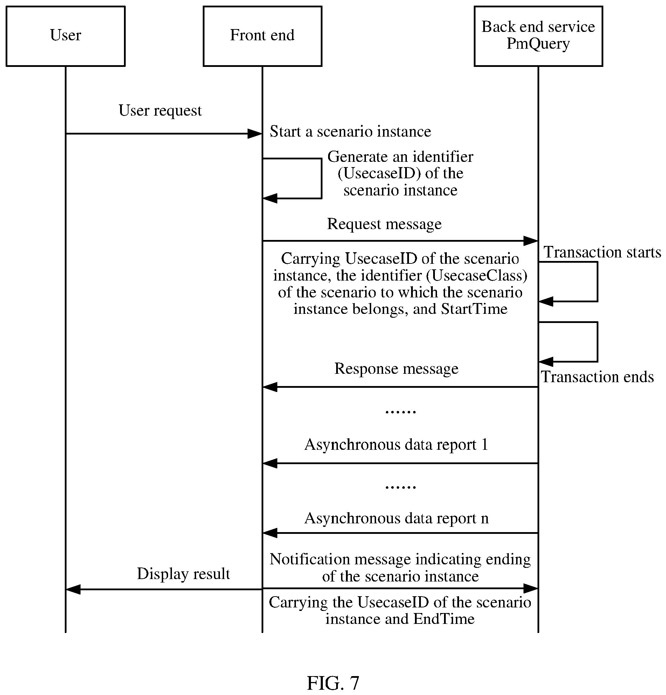

As shown in FIG. 7, in this embodiment, after receiving a user request, a front end starts a scenario instance Usecase, and generates an identifier UsecaseID. A request message sent by the front end when calling a back end service A carries the UsecaseID, an identifier UsecaseClass of a scenario to which the Usecase belongs, and a start time StartTime of the Usecase. The back end service A starts a processing of a transaction after receiving the request message, and returns a response message to the front end after the processing ends. The subsequent data is reported by the service A to the front end (Portal) through an asynchronous message. The front end may decide to end the Usecase as needed, and then send a notification message indicating the ending of the scenario instance to the service A, which carries an end time EndTime of the UsecaseID and the scenario instance.

Similar to the above embodiment, the user may analyze steps of the entire Usecase process through information acquisition (which may also be called as data acquisition) and statistics of the monitoring system.

### Embodiment five

This embodiment relates to a monitoring of an electronic commerce system. A typical electronic commerce system may include the following several services (subsystems): a product service, a shopping service, a payment service, a customer service, and a comment service.

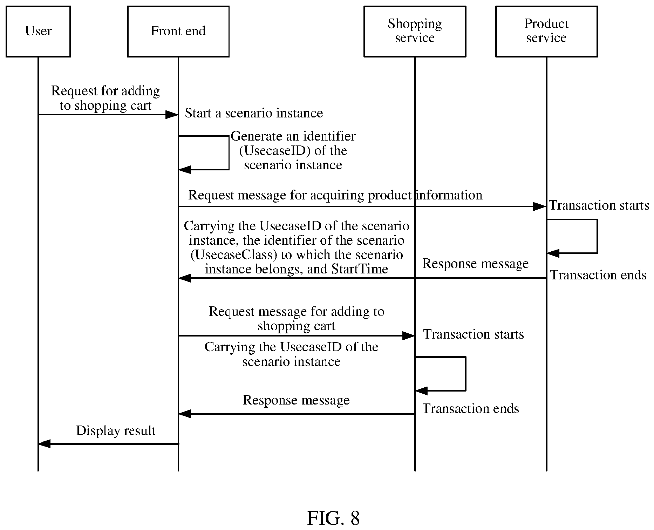

This embodiment takes an example of a scenario in which the user initiates an operation of "add to shopping cart" on the interface. Viewed from the system, and the front end of the scenario instance of the scenario needs to interact with the shopping service and the product service of the back end. As shown in FIG. 8, the method includes the steps described below.

In step 1: after receiving the user request of "add to shopping cart", the front end starts a scenario instance named "add to shopping cart", and generates an identifier UsecaseId for the scenario instance.

In step 2, the front end calls the product service, and the request message sent by the front end carries an identifier UsecaseId of the scenario instance, an identifier UsecaseClass of the scenario and a start time StartTime. The product service starts the processing of a transaction, and returns a response message to the front end after the end of the processing.

In step 3: after call to the product service made by the front end is completed, the front end initiate to call the shopping service, and the request message sent by the front end carries the UsecaseId. The shopping service starts a processing of a transaction after receiving the request message, and returns a response message to the front end after the processing ends.

It can be seen that the above two calling processes may be associated through UsecaseId. The monitoring system acquires information of the transaction including information related to the scenario instance, completes data processing and persistence, and the like. The operation and maintenance user may analyze the success rate, the operation latency, and the frequency of the scenario of performance query.

It should be understood by those skilled in the art that functional modules/units in all or part of the steps of the method, the system and the apparatus disclosed above may be implemented as software, firmware, hardware and appropriate combinations thereof. In the hardware implementation, the division of the functional modules/units mentioned in the above description may not correspond to the division of physical components. For example, one physical component may have several functions, or one function or step may be executed jointly by multiple physical components. Some or all physical components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer-storage medium include, but is not limited to, a random access memory (RAM), a read-only memory (ROM), an electrically erasable programmable read-only memory (EEPROM), a flash memory, or other memory technologies, a compact disc read-only memory (CD-ROM), a digital versatile disc (DVD) or other optical disc storage, a magnetic cassette, a magnetic tape, disk storage or other magnetic storage apparatus, or any other medium used to store the desired information and accessible by a computer. In addition, as is known to those skilled in the art, the communication medium generally includes computer-readable instructions, data structures, program modules or other data in modulated data signals such as carriers or other transmission mechanisms, and may include any information delivery medium.

## Claims

1. A method for tracking software behavior, comprising:
after receiving a user request, generating (110), by a front end of an application system, an identifier of a scenario instance, wherein the scenario instance comprises a plurality of transactions, and a scenario to which the scenario instance belongs corresponds to a user operation triggering the user request; and
in a processing of the scenario instance, for each of the plurality of transactions, sending (120), by the front end, a back end service of the application system a respective one of a plurality of request messages which carries the identifier of the scenario instance and is used to trigger each of the plurality of transactions, the plurality of transactions are associated with each other according to the identifier of the scenario instance and information of each of the plurality of transactions comprises the identifier of the scenario instance;
wherein one of the plurality of request messages sent by the front end to the back end service for a first transaction further carries an identifier of the scenario which is used to indicate that the scenario instance belongs to the scenario.

2. The method of claim 1, further comprising: after the processing of the scenario instance completes, sending, by the front end, a notification message indicating ending of the scenario instance to the back end service, wherein the notification message carries end time information and the identifier of the scenario instance.

3. A method for monitoring software behavior, comprising:
after a back end service of an application system receives a plurality of request messages sent by a front end of the application system, acquiring (210), by a monitoring system, information of each transaction of a plurality of transactions triggered by a respective request message of the plurality of request messages, wherein the information of the each transaction comprises an identifier of a scenario instance acquired from the respective request message, wherein the scenario instance comprises the plurality of transactions which are associated with each other according to the identifier of the scenario instance; and
performing (220), by the monitoring system, information statistics based on the acquired information of the each transaction, obtaining statistics information of the scenario instance and statistics information of the each transaction comprised in the scenario instance according to the identifier of the scenario instance;
wherein information of one of the plurality of transactions acquired by the monitoring system further comprises an identifier of a scenario acquired from a corresponding request message of the plurality of request message sent by the front end for a first transaction, wherein the identifier of the scenario is used to indicate that the scenario instance belongs to the scenario; and
the method further comprises: when performing information statistics based on the acquired information of the each transaction, performing, by the monitoring system, classification statistics of the scenario according to the identifier of the scenario.

4. The method of claim 3, wherein the method further comprises: after the back end service receives a notification message indicating ending of the scenario instance sent by the front end, acquiring, by the monitoring system, end time information and the identifier of the scenario instance from the notification message;
wherein the statistics information of the scenario instance obtained by the monitoring system according to the identifier of the scenario instance comprises the end time information of the scenario instance.

5. A system for tracking software behavior, comprising a front end and a back end, wherein the front end comprises:
a reception module (10), configured to generate, after receiving a user request, an identifier of a scenario instance, wherein the scenario instance comprises a plurality of transactions, and a scenario to which the scenario instance belongs corresponds to a user operation triggering the user request; and
a processing module (20), configured to send, in a processing of the scenario instance, for each of the plurality of transactions, the back end service a respective one of a plurality of request messages which carries the identifier of the scenario instance and is used to trigger each of the plurality of transactions, the plurality of transactions are associated with each other according to the identifier of the scenario instance and information of each of the plurality of transactions comprises the identifier of the scenario instance;
wherein the processing module is further configured to send, in the processing of the scenario instance for a first transaction, one of the plurality of request messages to the back end service, wherein the one of the plurality of request messages carries an identifier of the scenario which is used to indicate that the scenario instance belongs to the scenario.

6. A computer-readable storage medium storing computer programs which, when executed by a processor, implement the method for tracking software behavior of any one of claims 1 or 2.

7. A monitoring system, comprising: a monitoring server and a monitoring agent implemented by embedding tracking codes at a back end service of an application system;
wherein the monitoring agent is configured to acquire, after the back end service receives a plurality of request messages sent by a front end, information of each transaction of a plurality of transactions triggered by a respective request message of the plurality of request messages and transmit the acquired information of the each transaction to the monitoring server, wherein the information of the each transaction comprises an identifier of a scenario instance acquired from the respective request message, wherein the scenario instance comprises the plurality of transactions which are associated with each other according to the identifier of the scenario instance; and
the monitoring server is configured to perform information statistics based on the information of the each transaction acquired by the monitoring agent, and obtain statistics information of the scenario instance and statistics information of the each transaction comprised in the scenario instance according to the identifier of the scenario instance;
wherein information of one of the plurality of transactions acquired by the monitoring agent further comprises an identifier of a scenario acquired from a corresponding request message of the plurality of request messages sent by the front end for a first transaction, wherein the identifier of the scenario is used to indicate that the scenario instance belongs to the scenario; and
the monitoring server is further configured to perform, when performing the information statistics based on the information of the each transaction acquired by the monitoring agent, classification statistics of the scenario according to the identifier of the scenario.

8. The monitoring system of claim 7, wherein the monitoring agent is further configured to acquire, after the back end service receives a notification message indicating ending of the scenario instance sent by the front end, end time information and the identifier of the scenario instance from the notification message; and
the monitoring server is further configured to obtain the following statistics information of the scenario instance according to the identifier of the scenario instance: the end time information of the scenario instance.

9. A computer-readable storage medium storing computer programs which, when executed by a processor, implement the method for monitoring software behavior of any one of claims 3 or 4.

## Patentansprüche

1. Verfahren zum Verfolgen von Softwareverhalten, umfassend:
Generieren (110) einer Kennung einer Szenarioinstanz durch ein Front-End eines Anwendungssystems nach Empfangen einer Benutzeranforderung, wobei die Szenarioinstanz eine Vielzahl von Transaktionen umfasst und ein Szenario, zu dem die Szenarioinstanz gehört, einer Benutzeroperation entspricht, die die Benutzeranforderung auslöst; und bei einer Verarbeitung der Szenarioinstanz für jede der Vielzahl von Transaktionen Senden (120) einer jeweiligen einer Vielzahl von Anforderungsnachrichten, die die Kennung der Szenarioinstanz enthält und zum Auslösen jeder der Vielzahl von Transaktionen verwendet wird, durch das Front-End an einen Back-End-Dienst des Anwendungssystems, wobei die Vielzahl von Transaktionen gemäß der Kennung der Szenarioinstanz miteinander verknüpft ist und Informationen zu jeder der Vielzahl von Transaktionen die Kennung der Szenarioinstanz umfassen;
wobei eine der Vielzahl von Anforderungsnachrichten, die durch das Front-End an den Back-End-Dienst für eine erste Transaktion gesendet wird, ferner eine Kennung des Szenarios enthält, die verwendet wird, um anzugeben, dass die Szenarioinstanz zu dem Szenario gehört.

2. Verfahren nach Anspruch 1, ferner umfassend: nachdem die Verarbeitung der Szenarioinstanz abgeschlossen ist, Senden einer Benachrichtigungsnachricht, die das Ende der Szenarioinstanz angibt, durch das Front-End an den Back-End-Dienst, wobei die Benachrichtigungsnachricht Informationen zur Endzeit und die Kennung der Szenarioinstanz enthält.

3. Verfahren zum Überwachen von Softwareverhalten, umfassend:
nachdem ein Back-End-Dienst eines Anwendungssystems eine Vielzahl von durch ein Front-End des Anwendungssystems gesendete Anforderungsnachrichten empfangen hat, Erfassen (210) von Informationen zu jeder Transaktion einer Vielzahl von Transaktionen, die durch eine jeweilige Anforderungsnachricht der Vielzahl von Anforderungsnachrichten ausgelöst wird, durch ein Überwachungssystem, wobei die Informationen zu jeder Transaktion eine Kennung einer Szenarioinstanz umfassen, die aus der jeweiligen Anforderungsnachricht erfasst wird, wobei die Szenarioinstanz die Vielzahl von Transaktionen umfasst, die gemäß der Kennung der Szenarioinstanz miteinander verknüpft ist; und
Durchführen (220) von Informationsstatistiken durch das Überwachungssystem auf Grundlage der erfassten Informationen zu jeder Transaktion, Erlangen von Statistikinformationen zur Szenarioinstanz und Statistikinformationen zu jeder in der Szenarioinstanz umfassten Transaktion gemäß der Kennung der Szenarioinstanz;
wobei Informationen zu einer der Vielzahl von Transaktionen, die durch das Überwachungssystem erfasst wird, ferner eine Kennung eines Szenarios umfassen, die aus einer entsprechenden Anforderungsnachricht der Vielzahl von Anforderungsnachrichten erfasst wird, die durch das Front-End für eine erste Transaktion gesendet wird, wobei die Kennung des Szenarios verwendet wird, um anzugeben, dass die Szenarioinstanz zu dem Szenario gehört; und
das Verfahren ferner Folgendes umfasst: beim Durchführen von Informationsstatistiken auf Grundlage der erfassten Informationen zu jeder Transaktion Durchführen von Klassifizierungsstatistiken des Szenarios gemäß der Kennung des Szenarios durch das Überwachungssystem.

4. Verfahren nach Anspruch 3, wobei das Verfahren ferner Folgendes umfasst: nachdem der Back-End-Dienst eine durch das Front-End gesendete Benachrichtigungsnachricht empfangen hat, die das Ende der Szenarioinstanz angibt, Erfassen von Informationen zur Endzeit und der Kennung der Szenarioinstanz aus der Benachrichtigungsnachricht durch das Überwachungssystem;
wobei die durch das Überwachungssystem erlangten Statistikinformationen der Szenarioinstanz gemäß der Kennung der Szenarioinstanz die Informationen zur Endzeit der Szenarioinstanz umfassen.

5. System zur Verfolgung von Softwareverhalten, das ein Front-End und ein Back-End umfasst, wobei das Front-End Folgendes umfasst:
ein Empfangsmodul (10), das dazu konfiguriert ist, nach dem Empfangen einer Benutzeranforderung eine Kennung einer Szenarioinstanz zu generieren, wobei die Szenarioinstanz eine Vielzahl von Transaktionen umfasst und ein Szenario, zu dem die Szenarioinstanz gehört, einer Benutzeroperation entspricht, die die Benutzeranforderung auslöst; und
ein Verarbeitungsmodul (20), das dazu konfiguriert ist, bei einer Verarbeitung der Szenarioinstanz für jede der Vielzahl von Transaktionen dem Back-End-Dienst jeweils eine der Vielzahl von Anforderungsnachrichten zu senden, die die Kennung der Szenarioinstanz enthält und verwendet wird, um jede der Vielzahl von Transaktionen auszulösen, wobei die Vielzahl von Transaktionen gemäß der Kennung der Szenarioinstanz miteinander verknüpft ist und Informationen zu jeder der Vielzahl von Transaktionen die Kennung der Szenarioinstanz umfassen;
wobei das Verarbeitungsmodul ferner dazu konfiguriert ist, bei der Verarbeitung der Szenarioinstanz für eine erste Transaktion eine der Vielzahl von Anforderungsnachrichten an den Back-End-Dienst zu senden, wobei die eine der Vielzahl von Anforderungsnachrichten eine Kennung des Szenarios enthält, die verwendet wird, um anzugeben, dass die Szenarioinstanz zu dem Szenario gehört.

6. Computerlesbares Speichermedium, das Computerprogramme speichert, die bei Ausführung durch einen Prozessor das Verfahren zum Verfolgen von Softwareverhalten nach einem der Ansprüche 1 oder 2 implementieren.

7. Überwachungssystem, umfassend: einen Überwachungsserver und einen Überwachungsagenten, der durch Einbettung von Verfolgungscodes in einen Back-End-Dienst eines Anwendungssystems implementiert ist;
wobei der Überwachungsagent, nachdem der Back-End-Dienst eine Vielzahl von durch ein Front-End gesendete Anforderungsnachrichten empfangen hat, dazu konfiguriert ist, Informationen zu jeder Transaktion einer Vielzahl von Transaktionen, die durch eine jeweilige Anforderungsnachricht der Vielzahl von Anforderungsnachrichten ausgelöst wird, zu erfassen und die erfassten Informationen zu jeder Transaktion an den Überwachungsserver zu übertragen, wobei die Informationen zu jeder Transaktion eine Kennung einer Szenarioinstanz umfassen, die aus der jeweiligen Anforderungsnachricht erfasst wird, wobei die Szenarioinstanz die Vielzahl von Transaktionen umfasst, die gemäß der Kennung der Szenarioinstanz miteinander verknüpft ist; und
der Überwachungsserver dazu konfiguriert ist, Informationsstatistiken auf Grundlage der durch den Überwachungsagenten erfassten Informationen zu jeder Transaktion durchzuführen und Statistikinformationen zu der Szenarioinstanz und Statistikinformationen zu jeder in der Szenarioinstanz umfassten Transaktion gemäß der Kennung der Szenarioinstanz zu erlangen;
wobei Informationen einer der Vielzahl von Transaktionen, die durch den Überwachungsagenten erfasst wird, ferner eine Kennung eines Szenarios umfassen, die aus einer entsprechenden Anforderungsnachricht der Vielzahl von Anforderungsnachrichten erfasst wird, die durch das Front-End für eine erste Transaktion gesendet wird, wobei die Kennung des Szenarios verwendet wird, um anzugeben, dass die Szenarioinstanz zu dem Szenario gehört; und
der Überwachungsserver ferner dazu konfiguriert ist, beim Durchführen der Informationsstatistiken auf Grundlage der durch den Überwachungsagenten erfassten Informationen zu jeder Transaktion Klassifizierungsstatistiken des Szenarios gemäß der Kennung des Szenarios durchzuführen.

8. Überwachungssystem nach Anspruch 7, wobei der Überwachungsagent, nachdem der Back-End-Dienst eine durch das Front-End gesendete Benachrichtigungsnachricht empfangen hat, die das Ende der Szenarioinstanz angibt, ferner dazu konfiguriert ist, Informationen zu der Endzeit und die Kennung der Szenarioinstanz aus der Benachrichtigungsnachricht zu erfassen; und
der Überwachungsserver ferner dazu konfiguriert ist, gemäß der Kennung der Szenarioinstanz die folgenden statistischen Informationen der Szenarioinstanz zu erlangen: die Informationen zu der Endzeit der Szenarioinstanz.

9. Computerlesbares Speichermedium, das Computerprogramme speichert, die bei Ausführung durch einen Prozessor das Verfahren zum Überwachen von Softwareverhalten nach einem der Ansprüche 3 oder 4 implementieren.

## Revendications

1. Procédé de suivi de comportement de logiciel, comprenant :
après réception d'une demande utilisateur, la génération (110), par un front-end d'un système d'application, d'un identifiant d'une instance de scénario, dans lequel l'instance de scénario comprend une pluralité de transactions, et un scénario auquel appartient l'instance de scénario correspond à une opération utilisateur déclenchant la demande utilisateur ; et lors d'un traitement de l'instance de scénario, pour chacune de la pluralité de transactions, l'envoi (120), par le front-end, à un service back-end du système d'application, d'un message respectif parmi une pluralité de messages de demande qui transporte l'identifiant de l'instance de scénario et est utilisé pour déclencher chacune de la pluralité de transactions, la pluralité de transactions sont associées les unes aux autres en fonction de l'identifiant de l'instance de scénario et les informations de chacune de la pluralité de transactions comprennent l'identifiant de l'instance de scénario ;
dans lequel l'un de la pluralité de messages de demande envoyés par le front-end au service back-end pour une première transaction transporte également un identifiant du scénario qui est utilisé pour indiquer que l'instance de scénario appartient au scénario.

2. Procédé selon la revendication 1, comprenant également : une fois le traitement de l'instance de scénario terminé, l'envoi, par le front-end, d'un message de notification indiquant la fin de l'instance de scénario au service back-end, dans lequel le message de notification transporte des informations d'heure de fin et l'identifiant de l'instance de scénario.

3. Procédé de surveillance de comportement de logiciel, comprenant :
après qu'un service back-end d'un système d'application a reçu une pluralité de messages de demande envoyés par un front-end du système d'application, l'acquisition (210), par un système de surveillance, d'informations de chaque transaction d'une pluralité de transactions déclenchées par un message de demande respectif de la pluralité de messages de demande, dans lequel les informations de chaque transaction comprennent un identifiant d'une instance de scénario acquis à partir du message de demande respectif, dans lequel l'instance de scénario comprend la pluralité de transactions qui sont associées les unes aux autres selon l'identifiant de l'instance de scénario ; et
la réalisation (220), par le système de surveillance, de statistiques d'informations à partir des informations acquises de chaque transaction, l'obtention d'informations statistiques de l'instance de scénario et d'informations statistiques de chaque transaction comprise dans l'instance de scénario selon l'identifiant de l'instance de scénario ;
dans lequel les informations d'une de la pluralité de transactions acquises par le système de surveillance comprennent également un identifiant d'un scénario acquis à partir d'un message de demande correspondant de la pluralité de messages de demande envoyés par le front-end pour une première transaction, dans lequel l'identifiant du scénario est utilisé pour indiquer que l'instance de scénario appartient au scénario ; et
le procédé comprend également : lors de la réalisation de statistiques d'informations à partir des informations acquises de chaque transaction, la réalisation, par le système de surveillance, de statistiques de classification du scénario en fonction de l'identifiant du scénario.

4. Procédé selon la revendication 3, dans lequel le procédé comprend également : après que le service back-end a reçu un message de notification indiquant la fin de l'instance de scénario envoyé par le front-end, l'acquisition, par le système de surveillance, d'informations d'heure de fin et de l'identifiant de l'instance de scénario à partir du message de notification ;
dans lequel les informations statistiques de l'instance de scénario obtenues par le système de surveillance en fonction de l'identifiant de l'instance de scénario comprennent les informations d'heure de fin de l'instance de scénario.

5. Système de suivi de comportement de logiciel, comprenant un front-end et un back-end, dans lequel le front-end comprend :
un module de réception (10), configuré pour générer, après réception d'une demande utilisateur, un identifiant d'une instance de scénario, dans lequel l'instance de scénario comprend une pluralité de transactions, et un scénario auquel appartient l'instance de scénario correspond à une opération utilisateur déclenchant la demande utilisateur ; et
un module de traitement (20), configuré pour envoyer, lors d'un traitement de l'instance de scénario, pour chacune de la pluralité de transactions, au service back-end un message respectif parmi une pluralité de messages de demande qui transporte l'identifiant de l'instance de scénario et est utilisé pour déclencher chacune de la pluralité de transactions, la pluralité de transactions sont associées les unes aux autres en fonction de l'identifiant de l'instance de scénario et les informations de chacune de la pluralité de transactions comprennent l'identifiant de l'instance de scénario ;
dans lequel le module de traitement est également configuré pour envoyer, lors du traitement de l'instance de scénario pour une première transaction, l'un de la pluralité de messages de demande au service back-end, dans lequel l'un de la pluralité de messages de demande transporte un identifiant du scénario qui est utilisé pour indiquer que l'instance de scénario appartient au scénario.

6. Support de stockage lisible par ordinateur stockant des programmes informatiques qui, lorsqu'ils sont exécutés par un processeur, mettent en œuvre le procédé de suivi de comportement de logiciel selon l'une quelconque des revendications 1 ou 2.

7. Système de surveillance, comprenant : un serveur de surveillance et un agent de surveillance mis en œuvre en intégrant des codes de suivi au niveau d'un service back-end d'un système d'application ;
dans lequel l'agent de surveillance est configuré pour acquérir, après que le service back-end a reçu une pluralité de messages de demande envoyés par un front-end, des informations de chaque transaction d'une pluralité de transactions déclenchées par un message de demande respectif de la pluralité de messages de demande, et transmettre les informations acquises de chaque transaction au serveur de surveillance, dans lequel les informations de chaque transaction comprennent un identifiant d'une instance de scénario acquis à partir du message de demande respectif, dans lequel l'instance de scénario comprend la pluralité de transactions qui sont associées les unes aux autres selon l'identifiant de l'instance de scénario ; et
le serveur de surveillance est configuré pour réaliser des statistiques d'informations à partir des informations de chaque transaction acquises par l'agent de surveillance, et obtenir des informations statistiques de l'instance de scénario et des informations statistiques de chaque transaction comprise dans l'instance de scénario selon l'identifiant de l'instance de scénario ;
dans lequel les informations d'une de la pluralité de transactions acquises par l'agent de surveillance comprennent également un identifiant d'un scénario acquis à partir d'un message de demande correspondant de la pluralité de messages de demande envoyés par le front-end pour une première transaction, dans lequel l'identifiant du scénario est utilisé pour indiquer que l'instance de scénario appartient au scénario ; et
le serveur de surveillance est également configuré pour réaliser, lors de la réalisation des statistiques d'informations à partir des informations de chaque transaction acquises par l'agent de surveillance, des statistiques de classification du scénario en fonction de l'identifiant du scénario.

8. Système de surveillance selon la revendication 7, dans lequel l'agent de surveillance est également configuré pour acquérir, après que le service back-end a reçu un message de notification indiquant la fin de l'instance de scénario envoyé par le front-end, des informations d'heure de fin et l'identifiant de l'instance de scénario à partir du message de notification ; et
le serveur de surveillance est également configuré pour obtenir les informations statistiques suivantes de l'instance de scénario en fonction de l'identifiant de l'instance de scénario : les informations d'heure de fin de l'instance de scénario.

9. Support de stockage lisible par ordinateur stockant des programmes informatiques qui, lorsqu'ils sont exécutés par un processeur, mettent en œuvre le procédé de surveillance de comportement de logiciel selon l'une quelconque des revendications 3 ou 4.
